(19) Europäisches Patentamt
European Patent Office
Office européen des brevets

(11) **EP 2 422 067 B1**

(12) **EUROPÄISCHE PATENTSCHRIFT**

(45) Veröffentlichungstag und Bekanntmachung des Hinweises auf die Patenterteilung:
**07.06.2017 Patentblatt 2017/23**

(21) Anmeldenummer: **10710283.2**

(22) Anmeldetag: **18.03.2010**

(51) Int Cl.:
*F02D 41/40* *(2006.01)*

(86) Internationale Anmeldenummer:
**PCT/EP2010/053504**

(87) Internationale Veröffentlichungsnummer:
**WO 2010/121869 (28.10.2010 Gazette 2010/43)**

(54) **VERFAHREN UND STEUERGERÄT ZUM BETREIBEN EINES AKTORBETÄTIGTEN VENTILS**

METHOD AND CONTROL DEVICE FOR OPERATING A VALVE ACTUATED BY AN ACTUATOR

PROCÉDÉ ET UNITÉ DE COMMANDE PERMETTANT DE FAIRE FONCTIONNER UNE SOUPAPE COMMANDÉE PAR UN ACTIONNEUR

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **23.04.2009 DE 102009002593**

(43) Veröffentlichungstag der Anmeldung:
**29.02.2012 Patentblatt 2012/09**

(73) Patentinhaber: **Robert Bosch GmbH**
**70442 Stuttgart (DE)**

(72) Erfinder:
- **BECKER, Thomas**
  **73730 Esslingen/Zell (DE)**
- **GRIMMINGER, Christian**
  **71229 Leonberg (DE)**
- **FUCHS, Egbert**
  **70469 Stuttgart-Feuerbach (DE)**
- **SCANU, Maurizio**
  **70499 Stuttgart-Weilimdorf (DE)**
- **LANDHAEUSSER, Felix**
  **73274 Notzingen (DE)**
- **KEMMER, Helerson**
  **71665 Vaihingen (DE)**
- **KOBER, Ralph**
  **70839 Gerlingen (DE)**
- **HOEFLER, Sascha**
  **70619 Stuttgart (DE)**
- **RAPP, Holger**
  **71254 Ditzingen (DE)**
- **SCHMITT, Andreas**
  **71254 Ditzingen (DE)**
- **HOANG, Anh-Tuan**
  **El Paso**
  **Texas TX 79912 (US)**
- **GANN, Thomas**
  **71116 Gaertringen (DE)**
- **SZONN, Christian**
  **70469 Stuttgart (DE)**

(56) Entgegenhaltungen:
EP-A1- 1 026 384          EP-A2- 1 396 626
WO-A1-2005/066477      DE-A1- 10 329 065
DE-A1-102005 031 591

EP 2 422 067 B1

**Beschreibung**

Stand der Technik

Die Erfindung betrifft ein Verfahren zum Betreiben eines mittels eines Aktors betätigten Ventils, insbesondere eines Einspritzventils einer Brennkraftmaschine eines Kraftfahrzeugs, bei dem der Aktor mit einer eine Ansteuerdauer aufweisenden Ansteuergröße angesteuert wird.

Die Erfindung betrifft darüber hinaus ein Steuergerät und ein Computerprogramm zur Durchführung eines derartigen Verfahrens.

Aktorbetätigte Ventile der eingangs genannten Art kommen beispielsweise als Kraftstoffeinspritzventile von Brennkraftmaschinen zum Einsatz, wie sie in Kraftfahrzeugen verwendet werden. Solche Kraftstoffeinspritzventile besitzen in einer bevorzugten Ausführungsform ein Steuerventil, welches von dem Aktor angesteuert wird. Dabei bewirkt ein Öffnen des Steuerventils beispielsweise ein Öffnen einer Ventilnadel des Kraftstoffeinspritzventils, wobei der Nadelhub der Ventilnadel bevorzugt einem primär von einem Kraftstoffdruck abhängigen Hub-Zeitverlauf folgt. Ein Schließen des Steuerventils über eine entsprechende Ansteuerung des Aktors bewirkt dementsprechend eine Umkehr der Bewegungsrichtung der Ventilnadel des Einspritzventils und damit die Einleitung des Schließvorgangs. Auch bei dem Schließvorgang folgt die Ventilnadel in ihrer Bewegung einem vorgegebenen Hub-Zeitverlauf, der im Wesentlichen durch den Kraftstoffdruck festgelegt ist. Folglich wird eine Einspritzdauer während der Betätigung des Kraftstoffeinspritzventils im Wesentlichen durch die Öffnungsdauer des Steuerventils bestimmt. Insbesondere bei modernen, druckausgeglichenen Steuerventilen erfolgt eine weitgehende Entdrosselung des Ventilsitzes bereits bei sehr kleinen Nadelhüben, so dass als wirksame Öffnungsdauer des Steuerventils das Zeitintervall zwischen einem Abheben eines Ventilelements des Steuerventils aus seinem Sitz bis zu einem Wiedereintreffen des Ventilelements in seinen Sitz definiert werden kann.

Die tatsächliche hydraulische Öffnungsdauer des Steuerventils und damit auch des Kraftstoffeinspritzventils ist bei herkömmlichen Systemen jedoch nicht bekannt, sondern lediglich eine Ansteuerdauer, während der der Aktor des Kraftstoffeinspritzventils zur Betätigung des Steuerventils angesteuert wird. Zwischen einem Beginn der Ansteuerung des Aktors und einem tatsächlichen Öffnen des Kraftstoffeinspritzventils und zwischen einem Ende der Ansteuerung des Aktors und einem tatsächlichen Schließzeitpunkt des Kraftstoffeinspritzventils ergeben sich in der Regel sogenannte Ventilverzugszeiten, die bei den herkömmlichen Systemen eine Präzision bei der Kraftstoffzumessung verringern.

Aus der DE 10 2008 006706 ist ein Verfahren zur Ansteuerung von Magnetventilen bekannt, wobei zur Detektion eines Hubanschlags eines Magnetventils ein Strom zur Detektion eines Übergangs in einen passiven Schaltzustand aufgebaut wird, und wobei in einem Magnetfeld des Magnetventils noch inhärent gespeicherte Energie zum Aufbau des Stroms genutzt wird.

Offenbarung der Erfindung

Es ist daher Aufgabe der vorliegenden Erfindung, ein Verfahren, ein Steuergerät und ein Computerprogramm der eingangs genannten Art dahingehend zu verbessern, dass eine gesteigerte Präzision hinsichtlich der Einspritzung erzielt wird.

Diese Aufgabe wird bei dem Verfahren der eingangs genannten Art erfindungsgemäß durch die Merkmale der unabhängigen Ansprüche gelöst.

Als Aktor wird bevorzugt ein elektromagnetischer Aktor verwendet.

Bei einer besonders vorteilhaften Ausführungsform des erfindungsgemäßen Verfahrens ist vorgesehen, dass der Sollwert für die Ventilöffnungsdauer in Abhängigkeit einer Korrekturgröße modifiziert wird, wobei die Korrekturgröße in Abhängigkeit einer Regeldifferenz zwischen dem Sollwert für die Ventilöffnungsdauer und einem Istwert der Ventilöffnungsdauer gebildet wird. Hierdurch wird eine erfindungsgemäße Reglerstruktur zur Regelung der Ventilöffnungsdauer definiert, die eine weitere Steigerung der Präzision auch bei sich ändernden Randbedingungen ermöglicht. Besonders vorteilhaft werden sowohl langfristige Driften z.B. der Ventilverzugszeiten als auch kurzzeitige Änderungen, die z.B. von variablen Randbedingungen wie Temperatur, Eigenschaften des eingespritzten Fluids, Rücklauf-Gegendruck, Ventilstückdurchbiegung usw. herrühren, ausgeregelt.

Ganz allgemein kann im Rahmen der erfindungsgemäßen Regelung auch vorgesehen sein, dass die Ansteuerdauer in Abhängigkeit der Korrekturgröße gebildet wird.

Um eine Einschwinggeschwindigkeit und eine Empfindlichkeit des Reglers gegenüber Störungen einer Regeldifferenz optimal regulieren zu können, sieht eine weitere sehr vorteilhafte Ausführungsform der Erfindung vor, dass die Regeldifferenz mit einem Rückkopplungsfaktor multipliziert wird, der einen vorgebbaren Wertebereich von K=0 bis K=2, insbesondere bis K=1 aufweist.

Für ein besonders schnelles Einschwingen ist der Rückkopplungsfaktor bevorzugt zu etwa Eins zu wählen. Bei Bedarf kann die Robustheit des erfindungsgemäßen Reglers auch durch das Absenken des Rückkopplungsfaktors gesteigert werden. Beispielsweise kann bereits bei einer Wahl von K=0,5 eine große Robustheit erzielt werden, ohne auf eine hohe Regeldynamik zu verzichten. Untersuchungen der Anmelderin zufolge ist der erfindungsgemäße Regler bei dieser Konfiguration im Falle einer Regelabweichung nach nur etwa vier Arbeitszyklen des Einspritzventils zu mehr als etwa 90% Prozent wieder eingeschwungen. Dabei kann es vorteilhaft sein, den Rückkopplungsfaktor K des Reglers im Betrieb zu variieren, z.B. in Abhängigkeit vom vorliegenden Betriebspunkt oder von der Regeldifferenz. Im zuletzt genannten Fall ist es besonders vorteilhaft, den Rückkopplungsfaktor bei betragsmäßig kleiner werdender Regeldifferenz stufenlos oder schrittweise abzusenken.

Eine weitere Steigerung der Präzision des erfindungsgemäßen Verfahrens ist dadurch möglich, dass der Sollwert für die Ventilöffnungsdauer und/oder die Ansteuerdauer in Abhängigkeit einer geschätzten Schließverzugszeit und/oder einer geschätzten Öffnungsverzugszeit modifiziert wird.

Diese Ventilverzugszeiten und/oder der Sollwert für die Ventilöffnungsdauer können einer weiteren Erfindungsvariante zufolge in Abhängigkeit von einer durch das Ventil einzuspritzenden Sollmenge und/oder einem Kraftstoffdruck, vorzugsweise jeweils mittels eines Kennfelds, ermittelt werden.

Es ist erfindungsgemäß ferner möglich, dass das zur Ermittlung der geschätzten Schließverzugszeit und/oder Öffnungsverzugszeit oder dergleichen verwendete Kennfeld adaptiert wird, wenn vorgebbare Randbedingungen erfüllt sind, insbesondere wenn der die Ansteuerdauer bildende Regelkreis eingeschwungen ist.

Zur Durchführung des erfindungsgemäßen Verfahrens kann als Ventilöffnungsdauer bevorzugt eine Öffnungsdauer des Einspritzventils selbst verwendet werden, die angibt, über welchen Zeitraum hinweg durch das Einspritzventil tatsächlich ein Fluid eingespritzt bzw. dosiert wird.

Alternativ oder ergänzend kann erfindungsgemäß bei solchen Einspritzventilen, bei denen der Aktor auf ein den Betrieb des Einspritzventils steuerndes Steuer- bzw. Servoventil wirkt, vorgesehen sein, dass als Ventilöffnungsdauer eine Öffnungsdauer des Steuerventils verwendet wird. In diesem Fall wird demnach zumindest der Betrieb des Steuerventils erfindungsgemäß hinsichtlich der Ventilöffnungsdauer geregelt.

Eine vorteilhafte Vereinfachung des erfindungsgemäßen Verfahrens ergibt sich dadurch, dass anstelle der Ventilöffnungsdauer eine modifizierte Ventilöffnungsdauer betrachtet wird, die einer Summe aus der tatsächlichen Ventilöffnungsdauer und mindestens einer Ventilverzugszeit, insbesondere der Öffnungsverzugszeit, und/oder einer Prelldauer, entspricht. Dadurch kann eine erfindungsgemäße Regelung auch in solchen Fällen erfolgen, in denen die betreffenden Verzugs- bzw. Prellzeiten nicht oder zumindest nicht präzise ermittelt werden können. Bei dieser Erfindungsvariante wird dementsprechend nicht die reine Ventilöffnungsdauer allein geregelt, sondern vielmehr eine um die entsprechend berücksichtigte Größe erweiterte Ventilöffnungsdauer.

Da in der Praxis insbesondere die Messung der Öffnungsverzugszeit schwierig ist, wird das erfindungsgemäße Verfahren bevorzugt auch zur Regelung der Summe aus der Ventilöffnungsdauer und der Öffnungsverzugszeit verwendet.

Zur Einsparung von Ressourcen in einem das erfindungsgemäße Verfahren ausführenden Steuergerät kann einer weiteren vorteilhaften Ausführungsform zufolge vorgesehen sein, dass ein das Verfahren ausführender Regler in einem Zeitmultiplexbetrieb zwischen verschiedenen Einspritztypen, insbesondere Voreinspritzungen und/oder Haupteinspritzungen und/oder Nacheinspritzungen, und/oder zwischen verschiedenen Zylindern der Brennkraftmaschine, umgeschaltet wird.

Vor dem Umschalten sollte der Regler in seinem aktuellen Arbeitspunkt eingeschwungen sein, und eine ggf. auszuführende Adaption von an dem Regelungsprozess beteiligten Kennfeldern sollte abgeschlossen sein. Ist dies nicht der Fall, so können auch die zum Umschaltzeitpunkt vorliegenden, den Reglerzustand kennzeichnenden Größen wie z.B. der aktuelle Korrekturwert und/oder die aktuelle Regelabweichung in einem Speicher abgelegt werden, aus dem sie bei Wiederaufnahme des zu unterbrechenden Regelvorgangs wieder ausgelesen werden können.

Als eine weitere Lösung der Aufgabe der vorliegenden Erfindung ist ein Steuergerät gemäß Patentanspruch 11 angegeben.

Von besonderer Bedeutung ist die Realisierung des erfindungsgemäßen Verfahrens in Form eines Computerprogramms, das auf einem computerlesbaren Datenträger gespeichert ist und durch eine Recheneinheit des Steuergeräts ausgeführt werden kann.

Vorteilhafte Ausgestaltungen der Erfindung sind Gegenstand der Unteransprüche.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von deren Formulierung bzw. Darstellung in der Beschreibung beziehungsweise Zeichnung.

In der Zeichnung zeigt:

Figur 1a, 1b, 1c     verschiedene Betriebszustände eines erfindungsgemäß betriebenen Einspritzventils,

Figur 2     einen zeitlichen Verlauf von Betriebsgrößen eines Steuerventils des Einspritzventils aus Figur 1a bis 1c,

Figur 3     ein vereinfachtes Funktionsdiagramm eines Betriebsverfahrens aus dem Stand der Technik,

Figur 4     ein vereinfachtes Funktionsdiagramm einer ersten Ausführungsform des erfindungsgemäßen Betriebsverfahrens,

Figur 5 — ein vereinfachtes Funktionsdiagramm einer zweiten Ausführungsform des erfindungsgemäßen Betriebsverfahrens,

Figur 6 — ein vereinfachtes Funktionsdiagramm einer dritten Ausführungsform des erfindungsgemäßen Betriebsverfahrens,

Figur 7 — ein vereinfachtes Funktionsdiagramm einer vierten Ausführungsform des erfindungsgemäßen Betriebsverfahrens, und

Figur 8a, 8b — weitere Ausführungsformen des erfindungsgemäßen Betriebsverfahrens.

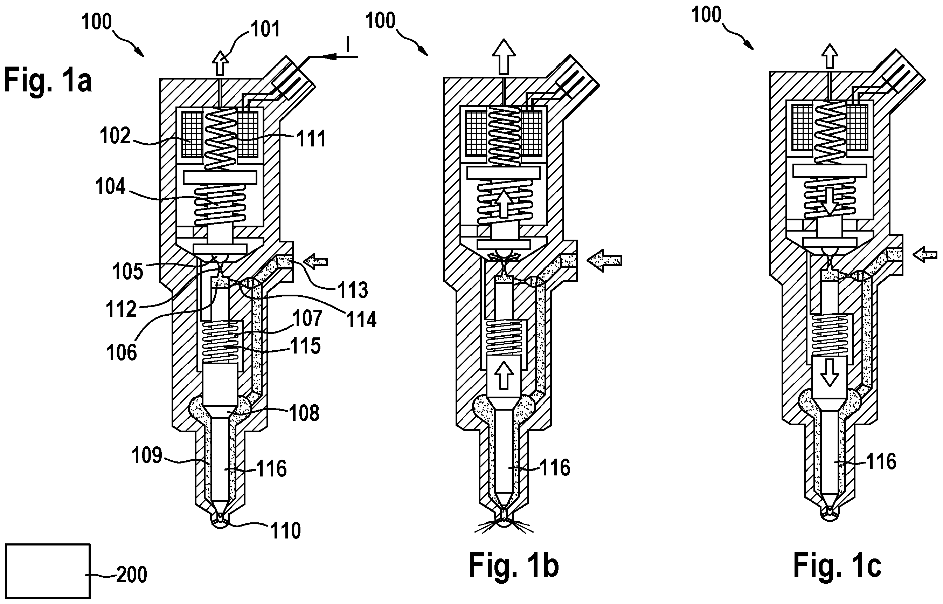

Figur 1a bis 1c zeigt eine Ausführungsform eines für die Kraftstoffeinspritzung vorgesehenen Einspritzventils 100 eines Common-Rail-Kraftstoffeinspritzsystems einer Brennkraftmaschine in verschiedenen Betriebszuständen eines Einspritzzyklus.

Figur 1a zeigt das Einspritzventil 100 in seinem Ruhezustand, in dem es nicht durch das Ihm zugeordnete Steuergerät 200 angesteuert wird. Eine Magnetventilfeder 111 presst hierbei eine Ventilkugel 105 in einen hierfür vorgesehenen Sitz der Ablaufdrossel 112, so dass sich in dem Ventilsteuerraum 106 ein dem Raildruck entsprechender Kraftstoffdruck aufbauen kann, wie er auch im Bereich des Hochdruckanschlusses 113 herrscht.

Der Raildruck steht auch in dem Kammervolumen 109 an, das die Ventilnadel 116 des Einspritzventils 100 umgibt. Die durch den Raildruck auf die Stirnfläche des Steuerkolbens 115 aufgebrachten Kräfte sowie die Kraft der Düsenfeder 107 halten die Ventilnadel 116 gegen eine öffnende Kraft, die an der Druckschulter 108 der Ventilnadel 116 angreift, geschlossen.

Figur 1b zeigt das Einspritzventil 100 in seinem geöffneten Zustand, den es unter Ansteuerung durch das Steuergerät 200 auf die folgende Weise ausgehend von dem in Figur 1a abgebildeten Ruhezustand einnimmt: Der vorliegend durch die in Figur 1a bezeichnete Magnetspule 102 und den mit der Magnetspule 102 zusammenwirkenden Magnetanker 104 gebildete elektromagnetische Aktor 102, 104 wird durch das Steuergerät 200 mit einem ein Ansteuersignal bildenden Ansteuerstrom I beaufschlagt, um ein schnelles Öffnen des vorliegend als Steuerventil arbeitenden Magnetventils 104, 105, 112 zu bewirken. Die Magnetkraft des elektromagnetischen Aktors 102, 104 übersteigt hierbei die Federkraft der Ventilfeder 111 (Figur 1a), so dass der Magnetanker 104 die Ventilkugel 105 von ihrem Ventilsitz abhebt und hiermit die Ablaufdrossel 112 öffnet.

Mit dem Öffnen der Ablaufdrossel 112 kann nun Kraftstoff aus dem Ventilsteuerraum 106 in dem gemäß Figur 1b darüber liegenden Hohlraum, vgl. die Pfeile, und über einen Kraftstoffrücklauf 101 zurück zu einem nicht abgebildeten Kraftstoffbehälter abfließen. Die Zulaufdrossel 114 verhindert einen vollständigen Druckausgleich zwischen dem im Bereich des Hochdruckanschlusses 113 anliegenden Raildruck und dem Druck in dem Ventilsteuerraum 106, so dass der Druck in dem Ventilsteuerraum 106 sinkt. Dies führt dazu, dass der Druck in dem Ventilsteuerraum 106 kleiner wird als der Druck in dem Kammervolumen 109, der nach wie vor dem Raildruck entspricht. Der verringerte Druck in dem Ventilsteuerraum 106 bewirkt eine dementsprechend verringerte Kraft auf den Steuerkolben 115 und führt somit zum Öffnen des Einspritzventils 100, das heißt zu dem Abheben der Ventilnadel 116 aus ihrem Ventilnadelsitz im Bereich der Spritzlöcher 110. Dieser Betriebszustand ist in Figur 1b veranschaulicht.

Anschließend, das heißt nach dem Abheben aus dem Ventilnadelsitz, vollführt die Ventilnadel 116 primär unter Einwirkung der hydraulischen Kräfte in dem Kammervolumen 119 und in dem Ventilsteuerraum 106 eine im Wesentlichen ballistische Trajektorie.

Sobald der elektromagnetische Aktor 102, 104 (Figur 1a) zu einem Ende der Ansteuerdauer nicht mehr durch das Steuergerät 200 angesteuert wird, drückt die Ventilfeder 111 den Magnetanker 104 wie in Figur 1c abgebildet, nach unten, so dass die Ventilkugel 105 daraufhin die Ablaufdrossel 112 verschließt. Hierdurch kehrt sich die Bewegungsrichtung der Ventilnadel 116 um, so dass diese wieder in ihre Schließlage verbracht wird.

Die Kraftstoffeinspritzung ist beendet, sobald die Ventilnadel 116 ihren Ventilnadelsitz im Bereich der Spritzlöcher 110 erreicht und diese verschließt, vgl. Figur 1c.

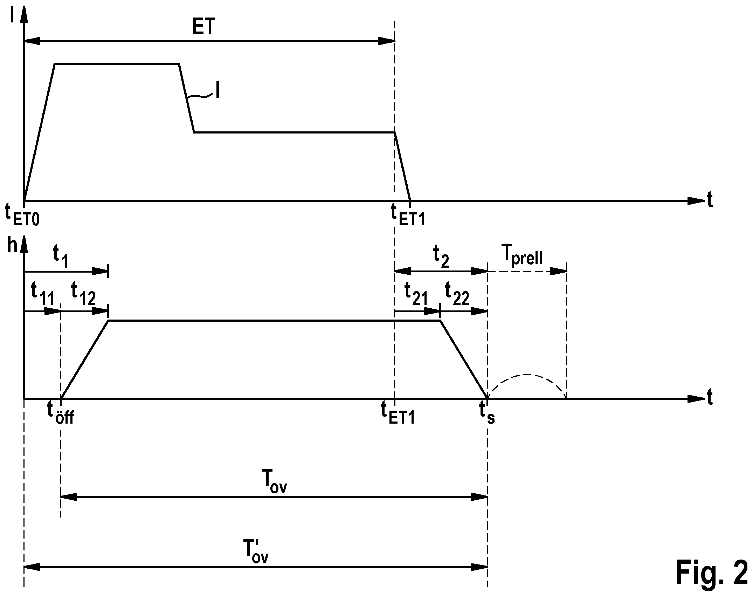

Figur 2 zeigt schematisch einen zeitlichen Verlauf der Betriebsgrößen Ansteuerstrom I, Hub h des Magnetankers 104, wie er sich während eines Ansteuerzyklus im Rahmen einer Kraftstoffeinspritzung ergibt.

Zunächst wird zu dem Zeitpunkt $t_{ET0}$ der elektromagnetische Aktor 102, 104 (Figur 1a) des Einspritzventils 100 bestromt, um ein Abheben des Magnetankers 104 bzw. der Ventilkugel 105 aus ihrem Ventilkugelsitz in dem Bereich der Ablaufdrossel 112 zu ermöglichen. Der Zeitpunkt $T_{ET0}$ definiert somit einen Beginn der durch das Ansteuersignal I definierten Ansteuerdauer ET des elektromagnetischen Aktors 102, 104 und damit auch des Einspritzventils 100.

Aufgrund einer nichtverschwindenden Öffnungsverzugszeit $t_{11}$ bewegt sich die Ventilkugel 105 erst ab dem tatsächlichen Öffnungszeitpunkt $t_{öff}$ aus ihrer Schließlage im Bereich der Ablaufdrossel 112 heraus. Die Öffnungsverzugszeit $t_{11}$ wird durch die hydraulische Konfiguration des Einspritzventils 100 und insbesondere durch die Vorgänge bei dem Abheben der Ventilkugel 105 von ihrem Ventilkugelsitz bestimmt.

Die Bestromung des elektromagnetischen Aktors 102, 104 dauert in dem in Figur 2 angegebenen Diagramm bis zu dem Ende $t_{ET1}$ der Ansteuerdauer ET an und kann über die Ansteuerdauer ET hinweg, wie in Figur 2 abgebildet, auch unterschiedliche Stromwerte aufweisen. Vorliegend ist für etwa die erste Hälfte der Ansteuerdauer ET ein größeres Stromniveau gewählt als für die zweite Hälfte der Ansteuerdauer ET, um ein besonders schnelles Öffnen des Steuerventils zu ermöglichen.

Seinen vollständig geöffneten Zustand hat das Steuerventil gemäß dem in Figur 2 abgebildeten, den Hubverlauf h des Magnetankers 104 bzw. der Ventilkugel 105 wiedergebenden Diagramm, nach der Zeit $t_1$ erreicht, die neben der bereits beschriebenen Öffnungsverzugszeit $t_{11}$ auch diejenige Zeit $t_{12}$ umfasst, die die Ventilkugel 105 für ihre Bewegung aus ihrer Schließlage heraus in ihre Öffnungslage benötigt.

Eine Schließverzugszeit $t_2$ ergibt sich gemäß Figur 2 im Anschluss an das Ende $t_{ET1}$ der Ansteuerdauer ET. Die Schließverzugszeit $t_2$ ergibt sich bei der Konfiguration des Einspritzventils 100 gemäß den Figuren 1a, 1b, 1c aus einer Halteverzugszeit $t_{21}$ und einer sich daran anschließenden Schließflugzeit $t_{22}$. Erst zu dem tatsächlichen Schließzeitpunkt ts = $t_{ET1}$ + $t_2$ weist das Steuerventil 104, 105, 112 des Einspritzventils 100 seinen geschlossenen Zustand auf.

Sofern die Ventilkugel 105 des Steuerventils bei ihrem Schließvorgang noch ein Prellverhalten zeigt, ergeben sich hierdurch bedingt auch nach dem tatsächlichen Schließzeitpunkt ts weitere, verhältnismäßig kurz andauernde, Zeitbereiche, während der das Steuerventil nicht vollständig geschlossen ist. Die Berücksichtigung solcher Prellzeiten $T_{prell}$ als faktische Verlängerung der Schließverzugszeit $t_2$ kann in einer später beschriebenen Weise erfolgen.

Erfindungsgemäß ist vorgesehen, dass die Ansteuerdauer ET zur Ansteuerung des Aktors 102, 104 (Figur 1a) in Abhängigkeit eines Sollwerts $T_{ovsoll}$ für eine Ventilöffnungsdauer $T_{ov}$ gebildet wird, wodurch eine präzisere Zumessung des einzuspritzenden Kraftstoffs möglich ist.

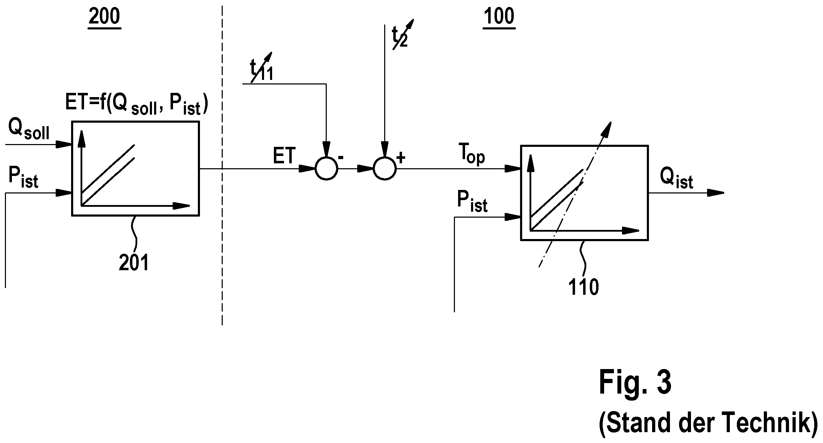

Nachstehend ist unter Bezugnahme auf das Funktionsdiagramm gemäß Figur 3 zunächst jedoch ein herkömmliches Betriebsverfahren für das Einspritzventil 100 beschrieben, das keine erfindungsgemäße Korrektur der Ansteuerdauer ET durchführt.

In einem ersten, beispielsweise mittels eines Kennfelds, realisierten Funktionsblock 201 wird bei dem herkömmlichen Betriebsverfahren in Abhängigkeit der Betriebsgrößen

- einzuspritzende Kraftstoffmenge $Q_{soll}$,
- Kraftstoffdruck $p_{ist}$

die Ansteuerdauer ET für die Ansteuerung des elektromagnetischen Aktors 102, 104 mit einem entsprechenden Strom I (Figur 2) ermittelt.

Als Störgrößen treten bei einer Ansteuerung des Aktors 102, 104 (Figur 1a) des Einspritzventils 100 mit dem auf herkömmliche Weise ermittelten, die Ansteuerdauer ET repräsentierenden, Signal die vorstehend

beschriebenen Verzugszeiten $t_{11}$, $t_2$ zu der herkömmlich ermittelten Ansteuerdauer ET hinzu, so dass das Schaltventil des Einspritzventils 100 tatsächlich für die Dauer einer modifizierten Ansteuergröße $T_{op}$ = ET - $t_{11}$ + $t_2$ geöffnet ist. Gegebenenfalls auftretende Toleranzen bei der Hochdruckhydraulik des Einspritzventils 100 sind in Figur 3 durch den Funktionsblock 110 symbolisiert. Aufgrund der vorstehend beschriebenen Ansteuerung mit dem Ansteuersignal $T_{op}$ und bei dem gegebenen Kraftstoffdruck $p_{ist}$, ergibt sich bei dem herkömmlichen System die tatsächlich eingespritzte Kraftstoffmenge $Q_{ist}$ am Ausgang des Funktionsblocks 110.

Durch den vorstehend bereits beschriebenen Einfluss der an sich unerwünschten Verzugszeiten $t_{11}$, $t_2$ handelt es sich bei der tatsächlich eingespritzten Kraftstoffmenge $Q_{ist}$ in der Regel nicht um die einzuspritzende Kraftstoff-Sollmenge $Q_{soll}$, die der Berechnung der Ansteuerdauer ET in dem Steuergerät 200 zugrundeliegt.

Dementsprechend sieht das erfindungsgemäße Verfahren vorteilhaft eine Bildung der Ansteuerdauer ET in Abhängigkeit eines Sollwerts $T_{ovsoll}$ für eine Ventilöffnungsdauer $T_{ov}$ vor, wodurch eine präzisere Zumessung des einzuspritzenden Kraftstoffs möglich ist.

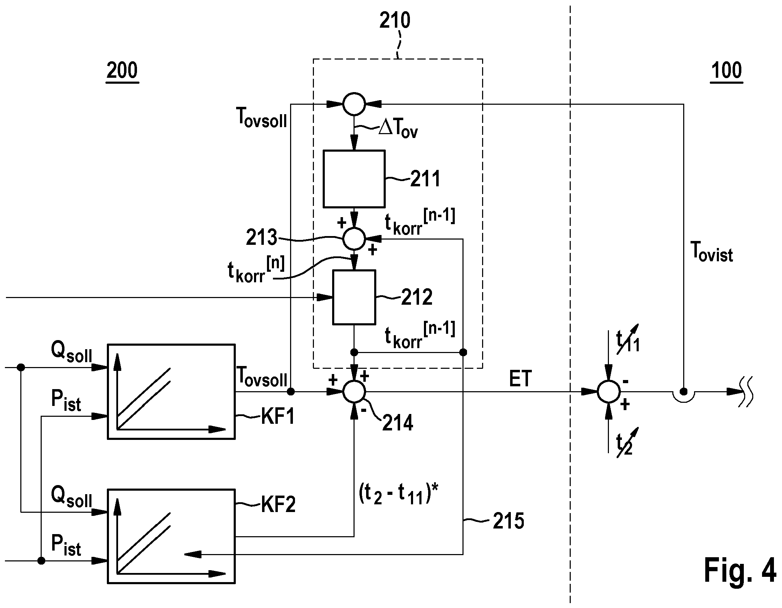

Eine erste Ausführungsform des erfindungsgemäßen Betriebsverfahrens ist nachfolgend unter Bezugnahme auf das Funktionsdiagramm gemäß Figur 4 beschrieben.

Im Gegensatz zu dem herkömmlichen Betriebsverfahren nach Figur 3 wird die Ansteuerdauer ET, während der der elektromagnetische Aktor 102, 104 (Figur 1a) mit einem vorgebbaren Ansteuerstrom I beaufschlagt wird, erfindungsgemäß in Abhängigkeit des Sollwerts $T_{ovsoll}$ für eine Ventilöffnungsdauer $T_{ov}$ gebildet. Bei der vorliegend betrachteten Ventilöffnungsdauer $T_{ov}$ handelt es sich um die Ventilöffnungsdauer des Steuerventils 104, 105, 112, vgl. auch Figur 1a und Figur 2.

Der Sollwert $T_{ovsoll}$ für die Ventilöffnungsdauer $T_{ov}$ wird, wie aus Figur 4 ersichtlich ist, vorteilhaft mittels eines ersten, bevorzugt statisch ausgebildeten, Kennfelds KF1 aus der einzuspritzenden Kraftstoffmenge $Q_{soll}$ und dem Kraftstoffdruck $p_{ist}$ ermittelt.

Ein Schätzwert $(t_2 - t_{11})^*$ wird durch ein weiteres Kennfeld KF2 aus denselben Eingangsgrößen $Q_{soll}$, $p_{ist}$ ermittelt. Der Schätzwert $(t_2 - t_{11})^*$ repräsentiert einen geschätzten Wert für die Differenz aus der Schließverzugszeit $t_2$ und der Öffnungsverzugszeit $t_{11}$ des Steuerventils. Das den Schätzwert $(t_2 - t_{11})^*$ liefernde weitere Kennfeld KF2 liefert somit einen Vorsteuerwert für die erfindungsgemäße Reglerstruktur.

Der ebenfalls in Figur 4 abgebildete Rückkopplungszweig 210 sieht die Bildung einer Regeldifferenz $\Delta T_{ov}$ zwischen dem Sollwert $T_{ovsoll}$ und einem entsprechenden, beispielsweise messtechnisch erfassten, Istwert $T_{ovist}$ vor. Die Regeldifferenz $\Delta T_{ov}$ wird in einem Funktionsblock 211 mit einem Rückkopplungsfaktor K multipliziert, der einen vorgebbaren Wertebereich von K=0 bis K=2, insbesondere bis etwa K=1 aufweist.

Dem Funktionsblock 211 ist ein weiterer Funktionsblock 212 nachgeordnet, der zusammen mit einem Addierer 213 eine Korrekturgröße $t_{korr}[n]$ für einen nachfolgenden n-ten Arbeitszyklus des Steuerventils gemäß der folgenden Gleichung bildet:

$$t_{korr}[n] = t_{korr}[n-1] + K * \Delta T_{ov}.$$

D.h., die Komponenten 211, 212, 213 realisieren einen Regler, der an seinem Ausgang die Korrekturgröße $t_{korr}[n]$ zur erfindungsgemäßen Korrektur des Werts $T_{ovsoll}$ ausgibt und damit zur präzisen Bildung der gewünschten Ansteuerdauer ET beiträgt.

Vorliegend werden die Größen $T_{ovsoll}$, $t_{korr}[n]$, $(t_2 - t_{11})^*$ über den Addierer 214 so miteinander addiert, dass sich für die erfindungsgemäße Ansteuerdauer ET ergibt:

$$ET = T_{ovsoll} + t_{korr}[n] - (t_2 - t_{11})^*.$$

Die vorstehend beschriebenen Komponenten zur erfindungsgemäßen Bildung der Ansteuerdauer ET sind beispielsweise in einer Recheneinheit des Steuergeräts 200 realisiert, was in Figur 4 durch die Anordnung der Komponenten in dem mit dem Bezugszeichen 200 markierten Bereich angedeutet ist.

In einem dem Einspritzventil zugeordneten Bereich 100 erfolgt wie vorstehend bereits beschrieben eine unerwünschte Beaufschlagung der erfindungsgemäß ermittelten Ansteuerdauer ET mit den Verzugszeiten $t_{11}$, $t_2$, so dass der Aktor 102, 104 tatsächlich für die Zeitdauer $ET + t_2 - t_{11}$ geöffnet ist, die auf einen messtechnisch erfassbaren Istwert $T_{ovist}$ der Ventilöffnungsdauer $T_{ov}$ führt. Der Istwert $T_{ovist}$ kann beispielsweise im Wege einer Auswertung der elektrischen Ansteuergrößen (Spannung, Strom I) des Aktors 102, 104 ermittelt werden.

Erfindungsgemäß kann ferner vorgesehen sein, dass das zur Ermittlung des Vorsteuerwerts $(t_2 - t_{11})^*$ verwendete Kennfeld KF2 unter Verwendung der Korrekturgröße $t_{korr}[n-1]$ adaptiert wird, vgl. den Pfeil 215, wenn vorgebbare Randbedingungen erfüllt sind, insbesondere wenn der die Ansteuerdauer ET bildende Regelkreis eingeschwungen ist. In diesem Fall ist zeitgleich zur Adaption des Kennfelds KF2 die Korrekturgröße $t_{korr}[n-1]$ zu Null zu setzen, weil ihr Einfluss auf die Bildung der Ansteuerdauer ET nunmehr in dem adaptierten Kennfeld KF2 enthalten ist.

Eine vorteilhafte Vereinfachung des erfindungsgemäßen Verfahrens ergibt sich dadurch, dass anstelle der Ventilöffnungsdauer $T_{ov}$ (Figur 2) eine modifizierte Ventilöffnungsdauer $T'_{ov}$ betrachtet wird, die einer Summe aus der Ventilöffnungsdauer und mindestens einer Ventilverzugszeit, insbesondere der Öffnungsverzugszeit, und/oder einer Prelldauer, entspricht. Dadurch kann eine erfindungsgemäße Regelung auch in solchen Fällen erfolgen, in denen die betreffenden Verzugs- bzw.

Prellzeiten nicht oder zumindest nicht präzise isoliert ermittelt werden können. Bei dieser Erfindungsvariante wird dementsprechend nicht die reine Ventilöffnungsdauer allein geregelt, sondern vielmehr eine um die entsprechend berücksichtigte Größe erweiterte Ventilöffnungsdauer.

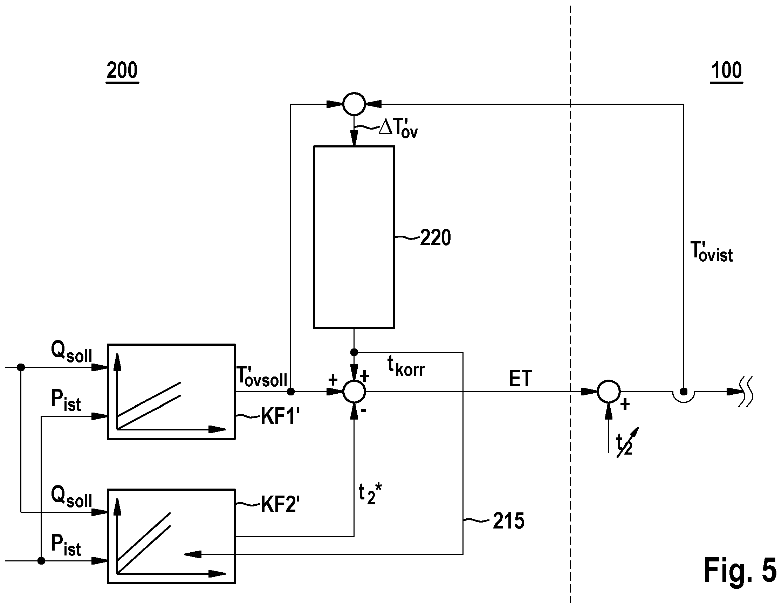

Da in der Praxis insbesondere die Messung der Öffnungsverzugszeit $t_{11}$ (Figur 2) schwierig ist, wird das erfindungsgemäße Verfahren bevorzugt auch zur Regelung der Summe $T'_{ov} = T_{ov} + t_{11}$ aus der Ventilöffnungsdauer und der Öffnungsverzugszeit verwendet, vgl. Figur 5. In diesem Fall stellt ein Kennfeld KF2' als Vorsteuerwert nur noch die geschätzte Schließverzugszeit $t_2^*$ bereit, das Kennfeld KF1' gibt einen Sollwert $T'_{ovsoll}$ für die modifizierte Ventilöffnungsdauer $T'_{ov}$ aus, und dem die Regeldifferenz $\Delta T'_{ov}$ bildenden Addierer wird als Eingangsgröße ein entsprechender Istwert $T'_{ovist}$ der modifizierten Ventilöffnungsdauer $T'_{ov}$ zugeführt, der keine isolierte Ermittlung der Öffnungsverzugszeit $t_{11}$ erfordert. Der Istwert $T'_{ovist}$ kann vielmehr auf einfache Weise als Summe der bekannten Ansteuerdauer ET und der messtechnisch ermittelbaren Schließverzugszeit $t_2$ ermittelt werden. Der Regler 220 gibt wiederum die erfindungsgemäße Korrekturgröße $t_{korr}$ aus, mittels der die Ansteuerdauer ET gebildet wird.

Weitere Ventilverzugszeiten oder auch die Prelldauer $T_{prell}$ können vorteilhaft auf eine vergleichbare Weise berücksichtigt werden. Zur Berücksichtigung der Prelldauer $T_{prell}$ muss beispielsweise der Ventilöffnungsdauer $T_{ov}$ (Figur 2) - analog zu den Verzugszeiten - eine von der Prelldauer $T_{prell}$ abhängige Zeitdauer zugeschlagen werden, die der Wirkung der Prelldauer $T_{prell}$ auf die Einspritzmenge entspricht. Hieraus ergibt sich wiederum die modifizierte Ventilöffnungsdauer $T'_{ov}$.

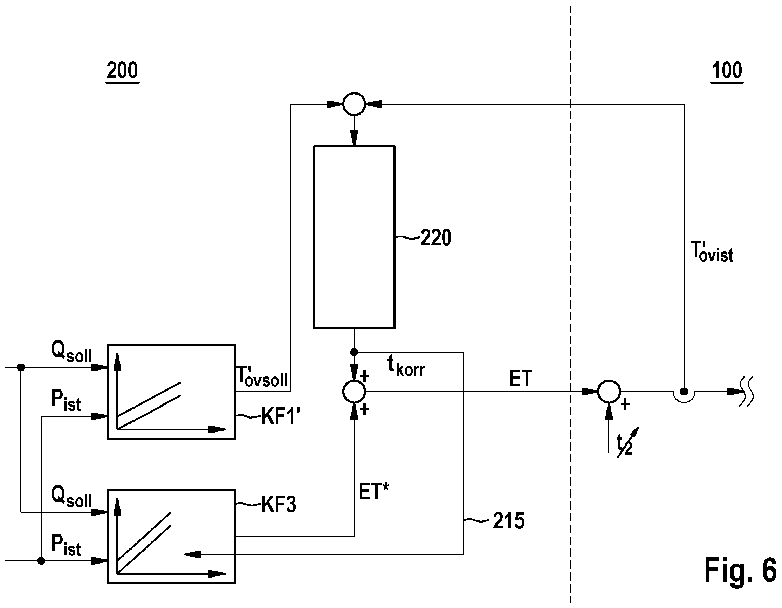

Figur 6 zeigt eine weitere Ausführungsform der Erfindung. Im Unterschied zu der Ausführungsform gemäß Figur 5 wird als Vorsteuerwert nunmehr eine geschätzte Ansteuerdauer $ET^*$ mittels des Kennfelds KF3 gebildet und zur Bildung der Ansteuerdauer ET verwendet. Der von dem Kennfeld KF1' gebildete Sollwert $T'_{ovsoll}$ für die modifizierte Ventilöffnungsdauer wird nicht mehr direkt zur Modifikation der Ansteuerdauer ET eingesetzt, sondern allein einem dem Regler 220 vorgelagerten Addierer zugeführt, der die Regeldifferenz bildet. Bei dieser Erfindungsvariante wird die Ansteuerdauer ET gemäß der Gleichung $ET = t_{korr} + ET^*$ erhalten. Über den update-Pfad 215 kann wiederum das Kennfeld KF3 adaptiert werden, sofern der Regler 220 eingeschwungen ist.

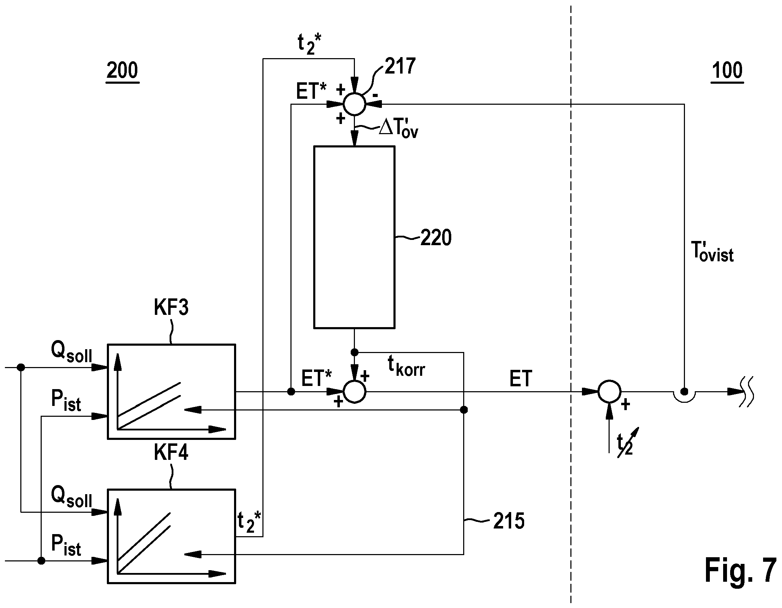

Figur 7 zeigt eine weitere Ausführungsform der Erfindung. In Übereinstimmung mit der vorstehend unter Bezugnahme auf Figur 6 beschriebenen Erfindungsvariante sieht auch die Reglerkonfiguration gemäß Figur 7 vor, dass die Ansteuerdauer ET in Abhängigkeit des von dem Regler 220 gelieferten Korrekturwerts $t_{korr}$ und der geschätzten Ansteuerdauer $ET^*$ gebildet wird. Allerdings wird dem Addierer 217, der die Regeldifferenz für den Regler 220 bildet, nunmehr die geschätzte Ansteuerdauer $ET^*$, der Schätzwert $t_2^*$ für die Schließverzugszeit und

der Istwert $T'_{ovist}$ der modifizierten Ventilöffnungsdauer $T'_{ov}$ zugeführt, so dass für die Regeldifferenz $\Delta T'_{ov}$ gilt:

$$\Delta T'_{ov} = ET^* + t_2^* - T'_{ovist}.$$

D.h., bei dieser Erfindungsvariante wird der Sollwert $T'_{ovsoll}$ für die modifizierte Ventilöffnungsdauer $T'_{ov}$ ausgedrückt durch den Term $ET^* + t_2^*$, so dass auch in diesem Fall die Bildung der Ansteuerdauer ET erfindungsgemäß in Abhängigkeit der modifizierten Ventilöffnungsdauer $T'_{ov}$ erfolgt.

Die Kennfelder KF3, KF4 stellen entsprechend die Größen $ET^*$, $t_2^*$ bereit, welche zusammen mit dem z.B. messtechnisch erhaltenen Wert $T'_{ovist}$ mittels des Addierers 217 in der bereits beschriebenen Weise kombiniert werden.

Auch bei dieser Erfindungsvariante kann in einem eingeschwungenen Zustand des Reglers 220 eine Adaption des Kennfelds KF3 erfolgen, vgl. den update-Pfad 215. Um zu verhindern, dass durch die Adaption des Kennfelds KF3 die Eingangsgröße des Reglers 220 verändert wird, kann vorteilhaft auch gleichzeitig das Kennfeld KF4 in zu der Adaption des Kennfelds KF3 inverser Weise adaptiert werden.

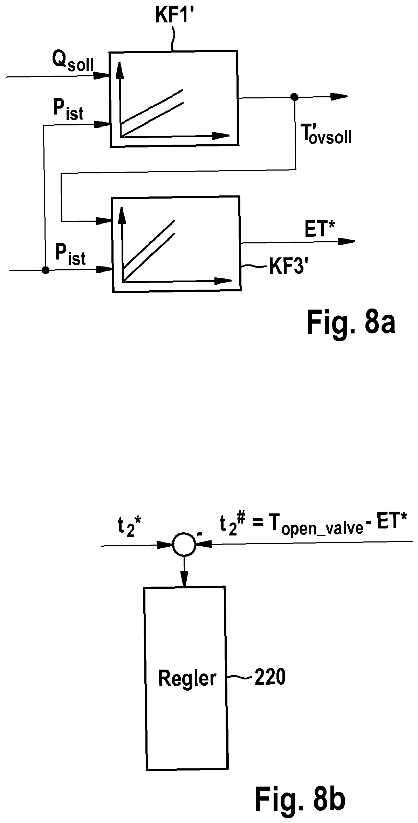

Figur 8a zeigt eine weitere vorteilhafte Ausführungsform des erfindungsgemäßen Verfahrens, bei der durch das Kennfeld KF1' der Sollwert $T'_{ovsoll}$ für die modifizierte Ventilöffnungsdauer $T'_{ov}$ in bereits beschriebener Weise in Abhängigkeit der Größen einzuspritzende Kraftstoffmenge $Q_{soll}$, Kraftstoffdruck $p_{ist}$ gebildet wird. Der Wert für die geschätzte Ansteuerdauer $ET^*$ wird durch das Kennfeld KF3' gebildet, dem als Eingangsgrößen der Kraftstoffdruck $p_{ist}$ und der durch das Kennfeld KF1' erhaltene Sollwert $T'_{ovsoll}$ zugeführt werden.

Figur 8b zeigt eine weitere vorteilhafte Ausführungsform des erfindungsgemäßen Verfahrens, bei der als Eingangsgröße für den Regler 220 nicht wie seither eine Differenz der Soll- und Istwerte für die Ventilöffnungsdauer $T_{ov}$ bzw. die modifizierte Ventilöffnungsdauer $T'_{ov}$ verwendet wird, sondern eine Differenz

$$t_2^* - t_2^{\#},$$

wobei

die Größe $t_2^{\#}$ eine virtuelle Schließverzugszeit $t_2^{\#}$ repräsentiert, die gemäß der nachstehenden Gleichung aus bekannten Größen erhalten wird:

$$t_2^{\#} = T'_{ov} - ET^*.$$

Dabei kann die geschätzte Ansteuerdauer $ET^*$ wiederum direkt über ein Kennfeld KF3 (Figur 6, 7) ermittelt werden oder gemäß der Gleichung:

$$ET^* = T'_{ovsoll} - t_2^*.$$

Entsprechend kann der Schätzwert $t_2^*$ für die Schließverzugszeit $t_2$ direkt über ein Kennfeld KF4 (Figur 7) erhalten werden, oder auch als Differenz

$$t_2^* = T'_{ovsoll} - ET^*.$$

Alternativ können dem Regler 220 anstelle der Differenz aus $T'_{ovsoll}$ und $T'_{ovist}$ (Figur 5) bzw. $T_{ovsoll}$ und $T_{ovist}$ (Figur 4) bzw. $t_2^*$ und $t_2^{\#}$ (Figur 8b) bzw. anstelle der Summe aus $ET^*$, $t_2^*$ und $-T'_{ovist}$ (Figur 7) auch zwei oder mehr der Größen $T_{ovsoll}$, $T_{ovist}$, $T'_{ovsoll}$, $T'_{ovist}$, $\Delta T_{ov}$, $\Delta T'_{ov}$ bzw. der Größen $t_2^*$, $t_2^{\#}$ und $t_2^* - t_2^{\#}$ als Eingangsgrößen zugeführt werden, wobei diese zwei oder mehr Größen dann erst in dem Regler 220 zu entsprechenden Differenzen weiterverarbeitet werden, aber auch voneinander getrennt verwertet werden können. Wichtig ist lediglich, dass aus den dem Regler 220 zugeführten Eingangsgrößen in dem Regler 220 die erfindungsgemäß betrachtete Ventilöffnungsdauer $T_{ov}$ bzw. $T'_{ov}$ gebildet werden kann.

Ferner ist es möglich, dass anstelle der Verwendung der explizit beschriebenen Kennfeldkombinationen KF1, KF2 (Figur 4); KF1', KF2' (Figur 5); KF1', KF3 (Figur 6); KF3, KF4 (Figur 7), d.h. zwei Kennfeldern für die drei zur Auswahl stehenden Ausgangsgrößen $T_{ovsoll}$ bzw. $T'_{ovsoll}$, $t_2^*$ und $ET^*$, zwischen denen definitionsgemäß der Zusammenhang $T'_{ovsoll} = ET^* + t_2^*$ besteht, zwei beliebige, voneinander linear unabhängige Linearkombinationen aus $T_{ovsoll}$ bzw. $T'_{ovsoll}$, $t_2^*$ und $ET^*$ in zwei Kennfeldern abgelegt werden. Aus diesen beiden Linearkombinationen kann dann zum einen der Wert von $ET^*$ wieder eindeutig errechnet werden, aus welchem dann durch Addition der von dem Regler 220 gebildeten Korrekturgröße $t_{korr}$ die Ansteuerdauer ET gebildet wird. Dem Regler 220 müssen als Eingangsgröße(n) eine oder mehrere verfügbare Größen zugeführt werden, aus denen sich $\Delta T_{ov}$ bzw. $\Delta T'_{ov}$ eindeutig ermitteln lässt.

Bei einem eingeschwungenen Zustand des Reglers 220 kann eine Adaption der verwendeten Kennfelder derart erfolgen, dass sich im Ergebnis die zumindest theoretisch aus den beiden in den Kennfeldern abgelegten Größen berechenbare Größe $ET^*$ um den Wert der Korrekturgröße $t_{korr}$ erhöht und dass gleichzeitig die ebenfalls theoretisch aus den beiden in den Kennfeldern abgelegten Größen berechenbare Größe $T'_{ovsoll} = ET^* + t_2^*$ unverändert bleibt.

Zur Einsparung von Ressourcen in dem das erfindungsgemäße Verfahren ausführenden Steuergerät 200 kann einer weiteren vorteilhaften Ausführungsform zufolge vorgesehen sein, dass der das Verfahren ausführende Regler 220 in einem Zeitmultiplexbetrieb zwischen verschiedenen Einspritztypen, insbesondere Voreinspritzungen und/oder Haupteinspritzungen und/oder Nacheinspritzungen, und/oder zwischen verschiedenen Zylindern der Brennkraftmaschine, umgeschaltet wird.

Vor dem Umschalten sollte der Regler 220 in seinem aktuellen Arbeitspunkt eingeschwungen sein, und eine ggf. auszuführende Adaption von an dem Regelungsprozess beteiligten Kennfeldern sollte abgeschlossen sein.

Alternativ kann auch vorgesehen sein, dass der Regler bei einer Umschaltung auf einen anderen Einspritztyp oder Zylinder nicht im eingeschwungenen Zustand befindlich sein muss. In diesem Fall ist in vorteilhafter Weise vorzusehen, dass die den Reglerzustand kennzeichnenden Größen (insbesondere $\Delta T_{ov}$ bzw. $\Delta T'_{ov}$ und $t_{korr}$) in einem Zwischenspeicher abgelegt werden. Bei Wiederaufnahme des Regelvorgangs auf diesem Zylinder oder diesem Einspritztyp werden diese Größen wieder aus dem Zwischenspeicher ausgelesen, so dass der Regler ausgehend von seinem zuletzt vorliegenden Einschwingzustand aus weiterarbeiten kann.

Der besondere Vorteil des erfindungsgemäßen Verfahrens besteht darin, dass die Ventilverzugszeiten $t_{11}$, $t_2$ sich nicht mehr auf die tatsächliche Ventilöffnungsdauer $T_{ov}$ bzw. $T'_{ov}$ und damit auf die eingespritzte Kraftstoffmenge auswirken, wohingegen sich die Ventilverzugszeiten $t_{11}$, $t_2$ bei herkömmlichen Verfahren in derselben Weise auf die eingespritzte Kraftstoffmenge auswirken wie die eigentlich gewünschte Ansteuerdauer ET selbst.

Besonders vorteilhaft werden sowohl langfristige Driften der Ventilverzugszeiten $t_{11}$, $t_2$ als auch kurzzeitige Änderungen, die z.B. von variablen Randbedingungen wie Temperatur, Eigenschaften des eingespritzten Fluids, Rücklauf-Gegendruck, Ventilstückdurchbiegung usw. herrühren, ausgeregelt.

Der erfindungsgemäße Regler 220 schwingt innerhalb weniger Arbeitszyklen des Einspritzventils 100 ein und arbeitet dennoch zuverlässig und robust. Zudem realisiert das erfindungsgemäße Verfahren auch eine Ausregelung der Wirkung externer Eingriffe wie z.B. eine absichtliche Vergrößerung des Ventilhubs, so dass vorteilhaft gleichzeitig ein Schutz gegen unautorisierte Tuningmaßnahmen gewährleistet ist.

Das erfindungsgemäße Verfahren zur Regelung der Ventilöffnungsdauer ist sowohl auf Steuer- bzw. Servoventile 120, 104, 105 (Figur 1a) von Einspritzventilen 100 anwendbar, wie sie beispielsweise in Common-Rail-Systemen von selbstzündenden Brennkraftmaschinen eingesetzt werden, als auch direkt auf Einspritzventile, die keine Steuerventile aufweisen und beispielsweise bei Benzindirekteinspritzsystemen eingesetzt werden.

Das erfindungsgemäße Prinzip kann ferner auf alle Schaltventile zur Dosierung eines Fluids, d.h. eines flüssigen oder eines gasförmigen Mediums, angewandt werden, insbesondere auch außerhalb des Bereichs von Kraftstoffsystemen oder auch des Kraftfahrzeugbereichs.

Ein weiterer, ganz besonderer Vorteil der Erfindung besteht in der geringen Komplexität des eingesetzten Reglers 220, der einen nur geringen Applikationsaufwand erfordert und sich durch große Robustheit auszeichnet.

Anstelle des vorstehend durch die Komponenten 211, 212, 213 (Figur 4) realisierten Reglers 220 mit Integralverhalten kann zur Ermittlung der Korrekturgröße $t_{korr}[n]$ aus der Regeldifferenz $\Delta T_{ov}$ bzw. $\Delta T'_{ov}$ auch eine Reglerstruktur verwendet werden, die Proportionalverhalten und/oder Differentialverhalten und/oder Integralverhalten aufweist und/oder nichtlineares Regelverhalten oder eine Kombination hieraus.

**Patentansprüche**

1. Verfahren zum Betreiben eines mittels eines Aktors (102, 104) betätigten Ventils (100), insbesondere eines Einspritzventils (100) einer Brennkraftmaschine eines Kraftfahrzeugs, bei dem der Aktor (102, 104) mit einer eine Ansteuerdauer (ET) aufweisenden Ansteuergröße (I) angesteuert wird, wobei die Ansteuerdauer (ET) in Abhängigkeit eines Sollwerts ($T_{ovsoll}$) für eine Ventilöffnungsdauer ($T_{ov}$) gebildet wird, wobei die Ansteuerdauer (ET) in Abhängigkeit der Korrekturgröße ($t_{korr}[n-1]$, $t_{korr}$) gebildet wird, wobei die Korrekturgröße ($t_{korr}[n-1]$, $t_{korr}$) in Abhängigkeit einer Regeldifferenz ($\Delta T_{ov}$) zwischen dem Sollwert ($T_{ovsoll}$) für die Ventilöffnungsdauer ($T_{ov}$) und einem Istwert ($T_{ovist}$) der Ventilöffnungsdauer ($T_{ov}$) gebildet wird, wobei der Sollwert ($T_{ovsoll}$) für die Ventilöffnungsdauer ($T_{ov}$) und/oder die Ansteuerdauer (ET) in Abhängigkeit einer geschätzten Schließverzugszeit ($t_2^*$) und/oder einer geschätzten Öffnungsverzugszeit modifiziert wird, wobei die geschätzte Schließverzugszeit ($t_2^*$) in Abhängigkeit von einer durch das Ventil (100) einzuspritzenden Sollmenge ($Q_{soll}$) und/oder einem Kraftstoffdruck ($p_{ist}$), mittels eines Kennfelds (KF2), ermittelt wird, **dadurch gekennzeichnet, dass** das zur Ermittlung der geschätzten Schließverzugszeit ($t_2^*$) verwendete Kennfeld (KF2) adaptiert wird, wenn vorgebbare Randbedingungen erfüllt sind, insbesondere wenn ein die Ansteuerdauer (ET) bildender Regelkreis eingeschwungen ist

2. Verfahren nach Anspruch 1, **dadurch gekennzeichnet, dass** der Sollwert ($T_{ovsoll}$) für die Ventilöffnungsdauer ($T_{ov}$) in Abhängigkeit einer Korrekturgröße ($t_{korr}[n-1]$, $t_{korr}$) modifiziert wird.

3. Verfahren nach Anspruch 2, **dadurch gekennzeichnet, dass** die Regeldifferenz ($\Delta T_{ov}$) mit einem Rückkopplungsfaktor (K) multipliziert wird, der einen vorgebbaren Wertebereich von K=0 bis K=2, insbesondere bis K=1 aufweist.

**4.** Verfahren nach einem der vorstehenden Ansprüche, **dadurch gekennzeichnet, dass** der Sollwert ($T_{ovsoll}$) für die Ventilöffnungsdauer ($T_{ov}$) und/oder die geschätzte Öffnungsverzugszeit in Abhängigkeit von einer durch das Ventil (100) einzuspritzenden Sollmenge ($Q_{soll}$) und/oder einem Kraftstoffdruck ($p_{ist}$), vorzugsweise jeweils mittels eines Kennfelds (KF1, KF2), ermittelt werden.

**5.** Verfahren nach einem der vorstehenden Ansprüche, **dadurch gekennzeichnet, dass** als Ventilöffnungsdauer ($T_{ov}$) eine Öffnungsdauer des Einspritzventils (100) verwendet wird.

**6.** Verfahren nach einem der vorstehenden Ansprüche, bei dem der Aktor (102, 104) auf ein den Betrieb des Einspritzventils (100) steuerndes Steuerventil (104, 105, 112) wirkt, **dadurch gekennzeichnet, dass** als Ventilöffnungsdauer ($T_{ov}$) eine Öffnungsdauer des Steuerventils (104, 105, 112) verwendet wird.

**7.** Verfahren nach einem der vorstehenden Ansprüche, **dadurch gekennzeichnet, dass** anstelle der Ventilöffnungsdauer ($T_{ov}$) eine modifizierte Ventilöffnungsdauer ($T'_{ov}$) betrachtet wird, die einer Summe aus der tatsächlichen Ventilöffnungsdauer ($T_{ov}$) und mindestens einer Ventilverzugszeit, insbesondere der Öffnungsverzugszeit ($t_{11}$), und/oder einer Prelldauer ($T_{prell}$), entspricht.

**8.** Verfahren nach einem der vorstehenden Ansprüche, **dadurch gekennzeichnet, dass** ein das Verfahren ausführender Regler (220) in einem Zeitmultiplexbetrieb zwischen verschiedenen Einspritztypen, insbesondere Voreinspritzungen und/oder Haupteinspritzungen und/oder Nacheinspritzungen, und/oder zwischen verschiedenen Zylindern der Brennkraftmaschine, umgeschaltet wird.

**9.** Steuergerät (200) zum Betreiben eines mittels eines Aktors (102, 104) betätigten Ventils (100), insbesondere eines Einspritzventils (100) einer Brennkraftmaschine eines Kraftfahrzeugs, **dadurch gekennzeichnet, dass** es zur Ausführung des Verfahrens nach einem der vorstehenden Ansprüche ausgebildet ist.

**10.** Computerprogramm mit Programmcodemitteln, um alle Schritte des Verfahrens nach einem der Ansprüche 1 bis 8 durchzuführen, wenn das Computerprogramm auf einem Computer oder einer entsprechenden Recheneinheit, insbesondere in einem Steuergerät (200) gemäß Anspruch 9, ausgeführt wird.

**11.** Computerprogrammprodukt mit Programmcodemitteln, die auf einem computerlesbaren Datenträger gespeichert sind, um alle Schritte des Verfahrens nach einem der Ansprüche 1 bis 9 durchzuführen, wenn das Computerprogramm auf einem Computer oder einer entsprechenden Recheneinheit, insbesondere in einem Steuergerät (200) gemäß Anspruch 10, ausgeführt wird.

**Claims**

**1.** Method for operating a valve (100) actuated by means of an actuator (102, 104), in particular an injection valve (100) of an internal combusting engine of a motor vehicle, in which the actuator (102, 104) is actuated with an actuation variable (I) having a first actuation period (ET), wherein the actuation period (ET) is formed as a function of a setpoint value ($T_{ovsoll}$) for a valve opening period ($T_{ov}$) wherein the actuation period (ET) is formed as a function of the correction variable ($t_{korr}[n-1]$, $t_{korr}$), wherein the correction variable ($t_{Korr}[n-1]$, $t_{Korr}$) is formed as a function of a control difference ($\Delta T_{ov}$) between the setpoint value ($T_{ovsoll}$) for the valve opening period ($T_{ov}$) and an actual value ($T_{ovist}$) of the valve opening period ($T_{ov}$), wherein the setpoint value ($T_{ovsoll}$) for the valve opening period ($T_{ov}$) and/or the actuation period (ET) are/is modified as a function of an estimated closing delay time ($t_2^*$) and/or an estimated opening delay time, wherein the estimated closing delay time ($t_2^*$) is determined as a function of a setpoint quantity ($Q_{soll}$) to be injected by the valve (100) and/or a fuel pressure ($p_{ist}$) by means of a characteristic diagram (KF2), **characterized in that** the characteristic diagram (KF2) which is used to determine the estimated closing delay time ($t_2^*$) is adapted if predefinable peripheral conditions are satisfied, in particular if a control loop which forms the actuation period (ET) has reached a steady state.

**2.** Method according to Claim 1, **characterized in that** the setpoint value ($T_{ovsoll}$) for the valve opening period ($T_{ov}$) is modified as a function of a correction variable ($t_{korr}[n-1]$, $t_{korr}$).

**3.** Method according to Claim 2, **characterized in that** the control difference ($\Delta T_{ov}$) is multiplied by a feedback factor (K) which has a predefinable value range from K=0 to K=2, in particular to K=1.

**4.** Method according to one of the preceding claims, **characterized in that** the setpoint value ($T_{ovsoll}$) for the valve opening period ($T_{ov}$) and/or the estimated opening delay time are determined as a function of a setpoint quantity ($Q_{soll}$) to be injected by the valve (100) and/or a fuel pressure ($p_{ist}$), preferably in each case by means of a characteristic diagram (KF1, KF2).

**5.** Method according to one of the preceding claims, **characterized in that** an opening period of the injection valve (100) is used as the valve opening period ($T_{ov}$).

6. Method according to one of the preceding claims, in which the actuator (102, 104) acts on a control valve (104, 105, 112) which controls the operation of the injection valve (100), **characterized in that** an opening period of the control valve (104, 105, 112) is used as a valve opening period ($T_{ov}$).

7. Method according to one of the preceding claims, **characterized in that** instead of the valve opening period ($T_{ov}$) a modified valve opening period ($T'_{ov}$) is considered which corresponds to a sum of the actual valve opening periods ($T_{ov}$) and at least one valve delay time, in particular the opening delay time ($t_{11}$) and/or a pounce period ($T_{prell}$).

8. Method according to one of the preceding claims, **characterized in that** a controller (220) which carries out the method is switched over in a time-division multiplex mode between the various injection types, in particular pre-injections and/or main injections and/or post-injections, and/or between various cylinders of the internal combustion engine.

9. Control unit (200) for operating a valve (100) actuated by means of an actuator (102, 104), in particular an injection valve (100) of an internal combustion engine of a motor vehicle, **characterized in that** said control unit (200) is designed to carry out the method according to one of the preceding claims.

10. Computer program having program code means for carrying out all the steps of the method according to one of Claims 1 to 8 when the computer program is run on a computer or a corresponding computing unit, in particular in a control unit (200) according to Claim 9.

11. Computer program product having program code means which are stored on a computer-readable data carrier in order to carry out all the steps of the method according to one of Claims 1 to 9 when the computer program is run on a computer or a corresponding computer unit, in particular in a control unit (200) according to Claim 10.

**Revendications**

1. Procédé pour faire fonctionner une vanne (100) actionnée au moyen d'un actionneur (102, 104), notamment un injecteur (100) d'un moteur à combustion interne d'un véhicule automobile, selon lequel l'actionneur (102, 104) est excité avec une grandeur d'excitation (I) qui présente une durée d'excitation (ET), la durée d'excitation (ET) étant formée en fonction d'une valeur de consigne ($T_{ovsoll}$) pour une durée d'ouverture de vanne ($T_{ov}$), la durée d'excitation (ET) étant formée en fonction de la grandeur de correction ($t_{korr}[n-1]$, $t_{korr}$), la grandeur de correction ($t_{korr}[n-1]$, $t_{korr}$) étant formée en fonction d'une différence de régulation ($\Delta T_{ov}$) entre la valeur de consigne ($T_{ovsoll}$) pour la durée d'ouverture de vanne ($T_{ov}$) et une valeur réelle ($T_{ovist}$) de la durée d'ouverture de vanne ($T_{ov}$), la valeur de consigne ($T_{ovsoll}$) pour la durée d'ouverture de vanne ($T_{ov}$) et/ou la durée d'excitation (ET) étant modifiées en fonction d'un temps de retard de fermeture (t2*) estimé et/ou d'un temps de retard d'ouverture estimé, le temps de retard de fermeture (t2*) estimé étant déterminé au moyen d'un diagramme caractéristique (KF2) en fonction d'une quantité de consigne ($Q_{soll}$) à injecter par la vanne (100) et/ou d'une pression de carburant ($p_{ist}$), **caractérisé en ce que** le diagramme caractéristique (KF2) utilisé pour déterminer le temps de retard de fermeture (t2*) estimé est adapté lorsque des conditions aux limites pouvant être prédéfinies sont remplies, notamment lorsqu'un circuit de régulation qui forme la durée d'excitation (ET) est en régime permanent.

2. Procédé selon la revendication 1, **caractérisé en ce que** la valeur de consigne ($T_{ovsoll}$) pour la durée d'ouverture de vanne ($T_{ov}$) est modifiée en fonction d'une grandeur de correction ($t_{korr}[n-1]$, $t_{korr}$).

3. Procédé selon la revendication 1, **caractérisé en ce que** la différence de régulation ($\Delta T_{ov}$) est multipliée par un facteur de rétroaction (K) qui présente une plage de valeurs pouvant être prédéfinie de $K = 0$ à $K = 2$, notamment à $K = 1$.

4. Procédé selon l'une des revendications précédentes, **caractérisé en ce que** la valeur de consigne ($T_{ovsoll}$) pour la durée d'ouverture de vanne ($T_{ov}$) et/ou le temps de retard d'ouverture estimé sont déterminés en fonction d'une quantité de consigne ($Q_{soll}$) à injecter par la vanne (100) et/ou d'une pression de carburant ($p_{ist}$), de préférence respectivement au moyen d'un diagramme caractéristique (KF1, KF2).

5. Procédé selon l'une des revendications précédentes, **caractérisé en ce que** la durée d'ouverture de vanne ($T_{ov}$) utilisée est une durée d'ouverture de l'injecteur (100).

6. Procédé selon l'une des revendications précédentes, avec lequel l'actionneur (102, 104) agit sur une vanne de commande (104, 105, 112) qui commande le fonctionnement de l'injecteur (100), **caractérisé en ce que** la durée d'ouverture de vanne ($T_{ov}$) utilisée est une durée d'ouverture de la vanne de commande (104, 105, 112).

**7.** Procédé selon l'une des revendications précédentes, **caractérisé en ce qu'**une durée d'ouverture de vanne modifiée (T'$_{ov}$) est prise en compte à la place de la durée d'ouverture de vanne (T$_{ov}$), laquelle correspond à une somme de la durée d'ouverture de vanne (T$_{ov}$) réelle et d'au moins un temps de retard de vanne, notamment du temps de retard d'ouverture (t$_{11}$) et/ou d'une durée de rebond (T$_{prell}$).

**8.** Procédé selon l'une des revendications précédentes, **caractérisé en ce qu'**un régulateur (220) qui met en oeuvre le procédé dans un fonctionnement à multiplexage temporel est permuté entre différents types d'injection, notamment des préinjections et/ou des injections principales et/ou des post-injections, et/ou entre différents cylindres du moteur à combustion interne.

**9.** Contrôleur (200) pour faire fonctionner une vanne (100) actionnée au moyen d'un actionneur (102, 104), notamment un injecteur (100) d'un moteur à combustion interne d'un véhicule automobile, **caractérisé en ce qu'**il est configuré pour mettre en oeuvre le procédé selon l'une des revendications précédentes.

**10.** Programme informatique comprenant des moyens de code de programme afin de mettre en oeuvre toutes les étapes du procédé selon l'une des revendications 1 à 8 lorsque le programme informatique est exécuté sur un ordinateur ou une unité de calcul correspondante, notamment dans un contrôleur (200) selon la revendication 9.

**11.** Produit de programme informatique comprenant des moyens de code de programme qui sont enregistrés sur un support de données lisible par ordinateur afin de mettre en oeuvre toutes les étapes du procédé selon l'une des revendications 1 à 9 lorsque le programme informatique est exécuté sur un ordinateur ou une unité de calcul correspondante, notamment dans un contrôleur (200) selon la revendication 10.

**Fig. 1a**

**Fig. 1b**

**Fig. 1c**

EP 2 422 067 B1

Fig. 2

**Fig. 3**
(Stand der Technik)

EP 2 422 067 B1

Fig. 4

Fig. 5

Fig. 6

Fig. 7

**Fig. 8a**

$$t_2^\# = T_{open\_valve} - ET^*$$

**Fig. 8b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008006706